# EUROPÄISCHE PATENTSCHRIFT

(11) **EP 2 981 582 B1**
(45) Veröffentlichungstag und Bekanntmachung des Hinweises auf die Patenterteilung: **16.03.2022**
(21) Anmeldenummer: 14717406.4
(22) Anmeldetag: 21.03.2014
(51) Int. Cl.: C09J 4/00, C08G 59/00, C08K 5/00, C09J 163/00

(54) **FESTE BIOGENE FÜLLSTOFFE IN VERKLEBUNGSMITTELN FÜR DIE BEFESTIGUNGSTECHNIK**
SOLID BIOGENIC FILLERS IN ADHESIVES FOR SECURING TECHNOLOGY
CHARGES BIOGÈNES SOLIDES DANS DES AGENTS ADHÉSIFS POUR LA TECHNIQUE DE FIXATION

(30) Priorität: 05.04.2013 DE 102013103403
(43) Veröffentlichungstag der Anmeldung: 10.02.2016
(73) Patentinhaber: fischerwerke GmbH & Co. KG, 72178 Waldachtal (DE)
(72) Erfinder: GRÜN, Jürgen, 79268 Bötzingen (DE); VOGEL, Martin, 79286 Glottertal (DE); SCHLENK, Christian, 79211 Denzlingen (DE); WEINELT, Christian, 79312 Emmendingen (DE)
(86) Internationale Anmeldenummer: PCT/EP2014/000771
(87) Internationale Veröffentlichungsnummer: WO 2014/161637

(56) Entgegenhaltungen:
- EP-A1- 2 570 457
- US-A- 4 311 621
- US-A1- 2007 213 464
- US-A1- 2008 050 602
- US-A1- 2010 101 724

## Beschreibung

Die Erfindung betrifft die Verwendung eines Kunstharz-Verklebungsmittels zum Einmörteln von Verankerungsmitteln in Löcher oder Spalten, insbesondere in Bohrlöchern, bei dem das Kunstharz-Verklebungsmittel und ein Verankerungs-mittel in ein Loch oder einen Spalt, auch in einem rissigen Substrat, wie rissigem Beton, eingebracht werden und das Kunstharz-Verklebungsmittel zum Aushärten gebracht wird, wobei das Kunstharz-Verklebungsmittel mehrkomponentig ist und ein oder mehrere Füllstoffe beinhaltet, wobei es einen biogenen Füllstoff beinhaltet, wobei das mehrkomponentige Kunstharz-Verklebungsmittel wie in Anspruch 1 oder einem davon abhängigen Anspruch definiert ist..

Es sind eine Reihe von (z.B. Injektions-)Befestigungsmörtelsystemen (Kunstharz-Verklebungsmittel) auf Basis verschiedenster polymerbildender Komponenten bekannt, die, mal als Ein-, mal als Zwei- oder Mehrkom-ponenten¬systeme ausgebildet, dem Einmörteln von Verankerungsmitteln wie Bolzen, Ankerstangen oder dergleichen, in Löchern, wie Bohrlöchern, oder Spalten, jeweils in festen Untergründen wie z.B. Mauerwerk oder Beton, dienen. An den Verankerungsmitteln können sodann weitere Bau-teile befestigt werden, z.B. Verkleidungselemente. Das Einmörteln der Verankerungsmittel beruht dabei zum einen auf Klebeeffekten im Sinne eines Stoffschlusses zwischen dem Kunstharz und einem Verankerungselement und/oder der benetzten Fläche des Loches oder Spaltes, und/oder zum anderen auf Formschluss, wie beispielsweise durch Umgeben mittels des Kunst-mörtels von vorspringenden oder einbuchtenden Abschnitten des Verankerungselements und/oder eines Lochs oder Spaltes.

Im Bereich der Kunstharze und Kunststoffe gibt es aus ökologischen, wirtschaftlichen und durch die Gesetzgebung favorisierten Gründen einen Bedarf, den Anteil von organisch gebundenem Kohlenstoff fossiler Bestandteile (beispielsweise aus Erdöl, Braun- oder Steinkohle gewonnen) zu vermindern.

Biomasse bzw. biosphärenbasierte (erneuerbare, nachhaltige, biobasierte) oder "biogene" Rohstoffe für Kohlenstoff sind ressourcenschonend und wegen ihrer langfristigen Erhältlichkeit von besonderem Interesse.

Zur Bewertung des Anteils an biobasierten Rohstoffen wird üblicherweise der Anteil biobasierten Kohlenstoffs, nachgewiesen durch die ¹⁴C-Methode, ermittelt. Da das Verhältnis der Kohlenstoffisotope noch nach dem Produktionsprozess bestimmt werden kann, ist eine Unterscheidung zwischen fossiler und biogener Biomasse möglich.

Biobasierte Produkte können vollständig oder mindestens teilweise aus biobasierten Rohstoffen bestehen. Es können auch weitere Zusatzstoffe, anorganische Stoffe oder fossile Materialien, oder zwei oder mehr davon, enthalten sein.

Es gibt Bestrebungen, vereinheitlichte Zertifizierungen von Produkten mit biobasierten Anteilen zu ermöglichen. Ein Beispiel ist das Zertifizierungsprogramm für biobasierte Produkte nach ASTM 6866 des TÜV Rheinland (DIN CERTCO, Berlin, Deutschland) für die Erlangung eines Kennzeichnungsrechts für ein Zertifikat "Biobasiert ... % DIN Geprüft", beispielsweise "Biobasiert 50 bis 85 % DIN Geprüft".

Für die Erlangung eines derartigen Zertifikats wird eine Doppelmindestanforderung festgelegt: Zum einen muss der Mindestgehalt an organischem Material, bestimmbar als Glühverlust, mindestens 50 Gew.-% betragen.

Zum anderen muss der Gehalt an biobasiertem Kohlenstoff 20 Gew.-% überschreiten (für ein Zertifikat "Biobasiert 20 bis 50 % DIN Geprüft" muss er zwischen 20 und 50 Gew.-% liegen, für ein Zertifikat "Biobasiert 50 bis 85 % DIN Geprüft" muss er zwischen 50 und 85 Gew.-% liegen, für ein Zertifikat "Biobasiert > 85 % DIN Geprüft" muss er bei mindestens 85 Gew.-% liegen. Bevorzugt liegt der Gehalt bei > 50 %.

Die Prüfung eines Produktes erfolgt durch Probennahme (meist durch den Hersteller oder Vertreiber selbst) aus der Produktion oder dem Vertrieb/Verkauf und deren Prüfung. Es gibt eine Erstprüfung und eine regelmäßige Überwachung.

Der Glühverlust kann dabei nach üblichen Verfahren bestimmt werden. Er entspricht der Menge an organischem Material. Eine bekannte Masse mo des Prüfmaterials wird verascht, die Masse des erhaltenen Rückstands an Feststoffen m_{f} bestimmt und von mo abgezogen. Dies entspricht dem flüchtigen bzw. organischen Anteil des Prüfmaterials. Ein hoher Glühverlust deutet auf einen hohen Anteil an organischer Substanz in der Probe hin, da der enthaltene Kohlenstoff oxidiert wird und als Kohlendioxid entweicht. Die Bestimmung kann z.B. nach DIN EN 14775 oder DIN 18128 erfolgen.

Der Anteil an biobasiertem Kohlenstoff wird auf der Basis der ASTM 6866 (Standard Test Method for Determining the Biobased Content of Solid, Liquid and Gaseous Samples Using Radiocarbon Analysis, durchgeführt (ASTM International, D6866:2008, Methode A) durchgeführt.

Es wurden eine größere Anzahl von Dokumenten mit Klebern oder Leimen auf Phenolharzbasis (nicht geeignet für die erfindungsgemäßen Zwecke) gefunden, von denen hier exemplarisch die US 4,311,621 (Holzverbinder mit Walnussschale oder Kokos- und Walnussschale (vorbehandelt mit gesättigtem Dampf) als Zusätze) und US 2,781,286 (Füllstoff pflanzliches Schalenmehl, wie aus Steinfrüchten, z.B. Walnussschale, genannt seien.

EP 1 978 061 A1 und EP 2 164 886 A betreffen härtbare Vinylpolymermassen mit vernetzbaren Silylgruppen und Photopolymerisationsinhibitoren, die als Füllstoffe u.a. Walnussmehl beinhalten können. Als Harze sind u.a. (Meth)acrylate, UP, Styrol etc., genannt, es geht um Klebe- und Dichtstoffe. WO 2009/ 009009 A2 betrifft (Meth)acrylat-Klebstoffe mit natürlich vorkommenden Füllstoffen mit freie Radikale hemmenden Eigenschaften (TPP als Sauerstofffänger), vor allem Holzmehl, wobei dort ausdrücklich auf inhibitorische Eigenschaften von ligninhaltigen Füllstoffen hingewiesen wird und daher Sauerstofffänger (Oxygen Scavenger) als nötig beschrieben werden. EP 1 832 638 A1 betrifft einen Heißkleber auf Polyacrylatbasis mit einem speziellen Polyacrylat und als Vernetzer Isocyanat. Organische Füllstoffe sind möglich, z.B. Walnussschalen. WO 2008/024444 A2 betrifft Klebstoffe auf Basis von Polyamidoamin-Epihalohydrinharzen mit Protein oder Ligninhaltigen Zusätzen, nennt Cellulosemassen aus Holz, als lignocellulosische Materialien, auch als Pulver. US 3,419,507 nennt latex-basierte Kleber mit Kohlenhydratfüllern und Walnussschalenmehl.

US 4,311,621 betrifft ein Verfahren zur Herstellung eines zellulosehaltigen Füllstoffes für einen Klebstoff zur Bindung von Holz unter Pressen unter Erhitzen, was für eine Befestigung von Verankerungsmitteln nicht in Frage kommt. EP 2 570 457 A1 nennt ein mehrkomponmentiges Kunstharz-Verklebungsmittel, das eine Kunstharzkomponente (A) und eine Härterkomponente (B) beinhaltet, jedoch ohne Nennung biologisch gewonnener Komponenten.

Simitzis, J., et al, European Polymer Journal (1996), 32(7), 857-863, wobei das Abfallprodukt Olivensteine als Füllstoff in einkomponentige Novolak-/Hexamethylentetramin-basierten bakelitartigen Systemen eine Steigerung der Aktivierungsenergie und des Frequenzfaktors zur Folge hatte.

Sobukawa. T., und Kanazawa, H., Mokuzai Kogyo (1980) 35(396), 110-115, beschreiben die Verwendung von Kokosnussschale, Weizenmehl oder Calciumcarbonat als Füllstoffen in Klebstoffen für Holz auf Basis von Vinylpolyurethanen und beschreiben eine Verminderung der Auflösungsgeschwindigkeit des Klebers in heißem Wasser mit Zugabe der genannten Füllstoffe und eine Verminderung der Bindungsstärke bei deren Zusatz.

Der Stand der Technik betrifft somit andere Aufgaben und Lösungen als bei der nun vorliegenden Erfindung.

Es wurden nun verschiedene Mehle geprüft. Getreide-, Holz- und bestimmte andere Mehle, sogen sich dabei mit den übrigen Harzkomponenten voll, so dass nur wenige Prozent an Zusatz möglich waren, bevor die Masse zu fest zur Verarbeitung war (siehe z.B. unten in den Beispielen).

Es wurde jedoch überraschend gefunden, dass es möglich ist, biogene (feste) Füllstoffe ausgewählt aus Mehlen, Kleien, Zuckern, (Poly)Sacchariden (was auch modifizierte Formen davon einschließt, wie z.B. auch Carboxymethylcellulosen), Pflanzenfasern, Alkyl(poly)glykosiden (z.B. Simulsol der Firma Seppic), Tanninen, Ligninen, Ligninsulfonaten oder Latex, oder Mischungen von zwei oder mehr davon, insbesondere Mehle oder Pulver aus Pflanzenkernen, Pflanzenschalen und aus Pflanzen gewonnener Kohle (oder Mischungen von zwei oder mehr davon oder mit den zuvor genannten biogenen Materialien) als Füllstoffe für die eingangs genannten mehrkomponentige Kunstharz-Verklebungsmittel (auch in größeren Anteilen) zu verwenden, ohne dass deren Eigenschaften negativ beeinträchtigt werden, wobei sogar positive Effekte gefunden werden.

Da es sich hierbei um biogene (und nicht fossile) Füllstoffe (biogene) Materialien) handelt, ermöglichen diese Mehle, Kleien, Zucker, (Poly)saccharide, Pflanzenfasern, Alkyl(poly)glykoside (z.B. Simulsol der Firma Seppic), Tannine, Lignine, Ligninsulfonate oder Latex, oder Mischungen von zwei oder mehr davon, insbesondere Mehle oder Pulver aus Pflanzenkernen, Pflanzenschalen und aus Pflanzen gewonnener Kohle (oder Mischungen von zwei oder mehr davon oder mit den zuvor genannten biogenen Materialien) eine Erhöhung des Anteils an biogenen Materialien in den genannten mehrkomponentigen Kunstharz-Verklebungsmitteln, ohne dass es durch ihre Verwendung anstelle eines mineralischen Füllstoffes zu einer wesentlichen oder überhaupt einer Reduktion der Auszugwerte kommt (für die Messmethode zur Ermittlung der Auszugswerte kann auch in anderen als den exemplifizierten Verklebungsmitteln die in den Beispielen genannte Methode verwendet werden).

Die Erfindung betrifft die Verwendung der genannten Biogenen Materialien, insbesondere von biogenen Kern- oder Schalenmehlen oder -pulvern aus Pflanzenfrüchten und/oder biogener Kohle, oder jeweils Mischungen von zwei oder mehr davon, als Füllstoff für mehrkomponentige Kunstharz-Verklebungsmittel für die erfindungsgemäßen Zwecke wie in Anspruch 1 definiert, wobei der entsprechende Füllstoff einem derartigen Mittel zugesetzt wird.

Die nachfolgenden Definitionen dienen der Klärung bestimmter Begriffe oder Symbole und der Beschreibung besonderer Ausführungsformen der Erfindung, wobei in den vor- und nachstehend genannten Ausführungsformen der Erfindung einzelne, mehrere oder alle Begriffe oder Symbole durch speziellere Definitionen ersetzt werden können, was zu besonderen Ausführungsformen der Erfindung führt.

Biogen bedeutet, dass die Füllstoffe (oder andere biogene Komponenten) aus Pflanzen oder pflanzlichen und/oder tierischen, vor allem aus pflanzlichen Materialien gewonnen werden.

Wo Gewichtsangaben in Prozent (Gew.-%) gemacht werden, beziehen sich diese, wenn nichts anderes gesagt ist, auf die Gesamtmasse der Reaktanden und Zusätze des erfindungsgemäßen Kunstharz-Verklebungsmittels (also die in der nach dem Mischen auszuhärtenden Masse vorhandenen Bestandteile bzw. deren Vorstufen ohne Verpackung, außer im Falle von Patronen oder Folien, die ebenfalls als Füllstoffe einen Beitrag zur Gesamtmasse des härtenden bzw. gehärteten Materials liefern können, und ohne andere mögliche Teile wie Statikmischer, Kartuschengehäuse oder dergleichen).

Wo (Meth)acrylate erwähnt werden, bedeutet dies Acrylate, Methacrylate oder Mischungen davon.

Biogene Füllstoffe (Materialien) sind Mehle, Kleien, Zucker, (Poly)saccharide, Pflanzenfasern, Alkyl(poly)glykoside (z.B. Simulsol der Firma Seppic), Tannine, Lignine, Ligninsulfonate oder Latex, oder Mischungen von zwei oder mehr davon, insbesondere Mehle oder Pulver aus Pflanzenkernen, Pflanzenschalen und insbesondere aus Pflanzen gewonnener Kohle (oder Mischungen von zwei oder mehr davon oder mit den zuvor genannten biogenen Materialien).

Die als biogene Füllstoffe bevorzugten Kern- oder Schalenmehle oder-pulver aus Pflanzenfrüchten sind Mehle aus Früchten mit harten Schalen oder Kernen, wie Nüssen oder Steinfrüchten, wie inbesondere Olivenkernmehl, Kokosnussschalenmehl oder (ferner) Walnussschalenmehl, aber auch Haselnussschalen¬mehl, Mandelmehl, Pfirsichkernmehl, Aprikosenkernmehl oder Kirschkernmehl.

Pflanzenkohle ist vorzugsweise eine Holzkohle (wie Grillkohle), z.B. aus Bäumen oder Sträuchern oder deren Bestandteilen gewonnen, beispielsweise aus Waldabfällen, oder aus speziellen Hölzern, wie Haselnuss-, Lindenholz-, Buchen-, Erlen- oder Faulbaumkohle, Weinrebenkohle, oder medizinische Kohle (auch in Form von Aktivkohle. Hydrophobere Kohlen können vorteilhaft sein. Günstig können Kohlen, die durch Verkokung von Holzabfällen gewonnen werden, eingesetzt werden.

Die biogenen Materialien, insbesondere biogene Kern- oder Schalenmehle, werden beispielsweise in einem Anteil von 5 bis 80 Gew.-%, beispielsweise von 10 bis 55 Gew.-%, zugesetzt. Ein Beispiel für geeignete Anteile liegt im Bereich von 10 bis 35 Gew.-%, ein anderes Bespiel im Bereich von 36 bis 60 Gew.-%.

"Beinhalten" oder "umfassen" bedeutet, dass neben den genannten Komponenten oder Merkmalen noch andere vorhanden sein können, steht also für eine nicht abschließende Aufzählung, im Gegensatz zu "enthalten", das eine abschließende Aufzählung der bei seiner Verwendung aufgezählten Komponenten oder Merkmale bedeutet.

Wo das Attribut "ferner" erwähnt wird, bedeutet dies, dass Merkmale ohne dieses Attribut stärker bevorzugt sein können.

"Und/oder" bedeutet, dass die genannten Merkmale/Substanzen jeweils alleine oder in Kombination von zwei oder mehr der jeweils genannten Merkmale/Substanzen vorliegen können.

"Ein" steht in der Regel (außer wenn wie direkt anschließend hier im Satz als Zahl erkennbar) für den unbestimmten Artikel und bedeutet insbesondere "mindestens ein" (im Sinne von 1, 2 oder mehr).

Als Kunstharz finden in erster Linie Reaktiv-Kunstharze auf Epoxidbasis oder wie in Anspruch 1 definierte radikalisch härtbare (= nach Zugabe eines Radikalbildners (Härter) härtende) Reaktiv-Kunstharze Verwendung (härtbare Komponente), die jeweils durch entsprechende Härter (Härterkomponenten) gehärtet werden können, wie z.B. nachstehend beschrieben.

### Kunstharze auf Epoxidbasis:

Die bei der Verwendung von bzw. in erfindungsgemäßen mehrkomponentigen Kunstharz-Verklebungsmitteln verwendbaren Reaktiv-Kunstharze auf Epoxidbasis beinhalten eine Epoxidkomponente, vorzugsweise auf Basis von Glycidylverbindungen, beispielsweise solchen mit einer durchschnittlichen Glycidylgruppenfunktionalität von 1,5 oder größer, insbesondere von 2 oder größer, z.B. von 2 bis 10, die optional weitere(n) Glycidylether als Reaktivverdünner beinhalten kann. Bei den Epoxiden der Epoxidkomponente han¬delt es sich vorzugsweise um Poly(einschließlich Di)-glycidylether von mindestens einem mehrwertigen Alkohol oder Phenol, wie Novolak, Bisphenol F oder Bis-phenol A, oder Gemische solcher Epoxide, beispielsweise erhältlich durch Umsetzung der entsprechenden mehrwertigen Alkohole mit Epichlorhydrin. Beispiele sind Trimethylolpropan-triglycidylether, Novolak-Epoxidharze, Bisphenol-A-Epichlorhydrinharze und/oder Bisphenol-F-Epichlor¬hydrinharze, beispielsweise mit einem durchschnittlichen Molekulargewicht von ≤ 2000. Die Epoxidharze können beispielsweise ein Epoxidäquivalent von 120 bis 2000, vor-zugsweise 150 bis 400, wie insbesondere 155 bis 195, beispielsweise 165 bis 185 aufwiesen. Der Anteil an der Gesamtmasse der Reaktanden und Zusätze des Injektions-Kunstmörtelsystems beträgt vorzugsweise 5 bis unter 100 Gew.-%, insbesondere 10 bis 80 Gew.-%, 10 bis 70 Gew.-% oder 10 bis 60 Gew.-%. Möglich sind auch Gemische von zwei oder mehr solcher Epoxid-Komponenten. Geeignete Epoxidharze, Reaktivverdünner und Härter sind auch in dem Standardwerk von Lee H und Neville K, "Handbook of Epoxy Resins" (New. York: McGraw-Hill), 1982 zu finden (diese Verbindungen werden hier durch Bezugnahme aufgenommen).

Vorzugsweise ist in allen Ausführungsformen der Erfindung zum Aushärten keine Wärmezufuhr und/oder (z.B. UV-) Lichtzufuhr von außen bei deren Verwendung erforderlich, das heißt, die Reaktion läuft insbesondere bei Umgebungstemperatur (z.B. Temperaturen zwischen -20 und 45 °C, z.B. bei 23 °C) ab und ohne zusätzliches Heizen oder Belichten mittels Heiz- oder Leuchtvorrichtungen und -Materialien.

"Auf Epoxidbasis" bedeutet insbesondere, dass die erfindungsgemäßen Kunstharz-Verklebungsmittel neben den bisher genannten Komponenten auch weitere übliche Inhaltsstoffe (z.B. Additive oder andere oben oder unten genannte Bestandteile) beinhalten können. Diese weiteren Inhaltsstoffe können beispielsweise in einer Menge von insgesamt bis zu 80, vorzugsweise zwischen 0,01 und 65 Gew.-%, vorliegen. Auch wo nicht ausdrücklich "auf Basis" erwähnt wird, sind derartige übliche Inhaltsstoffe mit beinhaltet.

Wichtige Beispiele für weitere Inhaltsstoffe sind ein oder mehrere ausgewählt aus Beschleunigern, nicht reaktiven Verdünnern, reaktiven Verdünnern, Thixotropiermitteln, weiteren außer den genannten Füllstoffen und weiteren Additiven.

Als Beschleuniger können z.B. tert-Amine, wie Imidazole oder tert-Aminophenole, wie 2,4,6-trimethylaminomethylphenol, Organophosphine oder Lewis-Basen oder-Säuren, wie Phosphorsäureester, oder Gemische von zwei oder mehr davon, in einer oder (insbesondere bei Mehrkomponentensystemen) bei mehreren der Komponenten, bevorzugt jeweils in einer Härterkomponente, beinhaltet sein, beispielsweise in einem Gewichtanteil von 0,001 bis 15 Gew.-%, bezogen auf die Gesamtmasse der Reaktanden und Zusätze des Injektions-Kunstmörtelsystems.

Als nicht reaktive Verdünner können beispielsweise Pflanzenöle, wie Rizinusöl, zugesetzt werden, beispielsweise in einem Anteil von 3 bis 60 Gew.-%, z.B. von 4 bis 55 Gew.-%.

Als Thixotropiermittel können übliche Rheologiehilfsmittel verwen¬det werden, wie pyrogene (insbesondere z.B. unter Hydrophobisierung oberflächenbehandelte) Kieselsäure. Sie können z.B. in einem Gewichtsanteil von 0,001 bis 50 Gew.-%, beispiels-weise von 0,5 bis 20 Gew.-%, zugesetzt werden.

Als weitere Füllstoffe können übliche Füllstoffe, insbesondere Zemente (z.B. Portlandzemente oder Tonerdeschmelzzemente), Kreiden, Sand, Quarzsand, Quarzmehl oder dergleichen, die als Pulver, in körniger Form oder in Form von Formkörpern zugesetzt sein können, Verwendung finden, oder andere, oder Gemische davon, wobei die Füllstoffe ferner oder insbesondere auch silanisiert sein können.

Die weiteren Füllstoffe können in einer oder in mehreren Komponenten, beispielsweise eines erfindungsgemäßen Mehrkomponentenkits, beispielsweise einer oder beiden Komponenten eines entsprechenden Zweikomponentenkits, vorhanden sein; der Anteil an weiteren Füllstoffen beträgt vorzugsweise 0 bis 90 Gew.-%, beispielsweise 10 bis 90 Gew.-%. Zusätzlich oder alter¬nativ können hydraulisch härtbare Füllstoffe, wie Gips, Branntkalk oder Zement (z.B. Tonerd- oder Portlandzement), Wassergläser oder aktive Aluminiumhydroxide, oder zwei oder mehr davon, zugesetzt werden.

Auch weitere Additive können zugesetzt sein, wie Weichmacher, nicht reaktive Verdünnungs-mittel, Flexibilisatoren, Stabilisatoren, Rheologiehilfsmittel, Netz- und Dispergiermittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, Gemische von zwei oder mehr davon. Derartige weitere Zusätze können vorzugsweise insgesamt in Gewichtsanteilen von insgesamt 0 bis 90 %, beispielsweise von 0 bis 40 Gew.-%, zugesetzt sein.

Bestimmte der bei der Definition der Epoxide genannten Verbindungen, wie Trimethylol¬pro-pantriglycidylether oder Hexandioldiglycidylether oder Glydidylpropyltrimethoxysilan, die eine geringere Viskosität als aromatische Gruppen enthaltende Epoxide aufweisen, können auch als reaktive Verdünner eingesetzt werden, beispielsweise in einem Gewichtsanteil von 0,1 bis 90 Gew.-%, z.B. zwischen 0,5 und 75 Gew.-% oder zwischen 1 und 40 Gew.-%.

Der Härter beinhaltet mindestens eine zur Epoxidhärtung gebräuchliche Verbindung (Reaktionspartner bei der Polyaddition). Der Begriff "Härter" bedeutet dabei vorzugsweise mindestens eine zur Epoxidhärtung gebräuchliche Verbindung mit oder ohne Füllstoffzusatz (insbesondere von biogenen Füllstoffen gemäß der Erfindung) und/oder weitere Zusätze, wie Wasser, Verdickungsmittel und/oder weitere Zusatzstoffe, wie Farbstoffe und dergleichen, mit anderen Worten, die komplette Härterkomponente. Der Härter kann als separate Komponente und/ oder (insbesondere in geschützter Form, d.h. z.B. in mikroverkapselter Form) auch in der Reaktionsharzformulierung (als einer härtbaren Kom-ponente, d.h. einer solchen, die nach Mischung mit dem Härter nach Aufbrechen der Hülle der Mikrokapsel durch Polyme¬risation aushärtet) eingearbeitet sein. Übliche Zusätze können zugesetzt sein, wie z.B. Füllstoffe (insbesondere wie oben definiert) und/ oder (insbesondere zur Herstellung einer Paste oder Emulsion) Lösungsmittel, wie Benzylalkohol und/oder Wasser.

Bei den zur Epoxidhärtung gebräuchlichen Verbindungen (die als Reaktionspartner bei der Polyaddition fungieren) handelt es sich insbesondere um solche mit zwei oder mehr Gruppen ausgewählt aus Amino, Imino, und Mercapto, beispielsweise entsprechende Amine (bevorzugt), Thiole, oder Amino¬thiole, oder Gemische von zwei oder mehr davon, beispielsweise wie in Lee H and Neville K, "Handbook of Epoxy Resins" (New. York: McGraw-Hill), 1982, genannt, welches hier diesbezüglich durch Bezugnahme aufgenommen wird, beispielsweise darin genannte Di- oder Polyamine, und/ oder Di- oder Polythiole.

In besonderen Ausführungsformen der Erfindung weisen die zur Epoxidhärtung gebräuchlichen Verbindungen, die Epoxidbasis oder beide keine Kautschukmodifikation auf.

Die zur Epoxidhärtung (allgemein) gebräuchlichen Verbindungen umfassen beispielsweise in einer Ausführungsform der Erfindung
- Di- oder Polyamine wie insbesondere aliphatische (wie Ethylendiamin), cycloaliphatische und aromatische Di- oder Polyamine, Amidoamine, Aminaddukte, Polyetherdiamine oder Polyphenyl/Polymethylenpolyamine, Mannich-Basen, Polyamide und dergleichen (wobei Mannich-Basen, insbesondere wie in der Druckschrift WO 2005/090433, vor allem auf den Seiten 3, letzter, bis S. 6, 2. Absatz offenbart, wie in Beispiel 1 oder insbesondere 2 davon, die hier diesbezüglich durch Bezugnahme aufgenommen wird, alleine oder im Gemisch mit ein oder mehreren weiteren Di- oder Polyaminen hervorzuheben sind);
- Di- oder Polythiole wie insbesondere di- oder höherfunktionale Thiole, beispielsweise Dimercapto-α,ω-C1-C12-Alkane, 4,4'-Dimercaptodicyclohexylmethan, Dimercaptodiphenylmethan oder dergleichen;
- ferner aliphatische Aminole, wie insbesondere Hydroxyniederalkylamine, wie Ethanolamin, Diethanolamin oder 3-Aminopropanol, oder aromatische Aminole, wie 2-, 3- oder 4-Aminophenol.

Es können auch Mischungen von zwei oder mehr der genannten zur Epoxidhärtung gebräuchlichen Verbindungen verwendet werden bzw. beinhaltet sein.

Die zur Epoxidhärtung gebräuchlichen Verbindungen liegen, falls vorhanden, vorzugsweise in Mengen von bis zu 95 Gew.-%, vorzugsweise von 2 bis 70 Gew.-%, bezogen auf die Gesamtmasse der Reaktanden und Zusätze der auszuhärtenden Masse des Kunstharz-Verklebungsmittels (z.B. Injektions-Kunstharzsystems) vor.

Bezogen auf die Härterkomponente eines erfindungsgemäßen mehrkomponentigen Kunstharz-Verklebungsmittels liegt der Anteil der entsprechenden Verbindungen in einer möglichen bevorzugten Ausführungsform der Erfindung bei 1 bis 95 Gew.-% z.B. 4 bis 95 Gew.-%, 5 bis 90 Gew.-% oder 10 bis 80 Gew.-%.

Insbesondere im Falle einer Härterkomponente eines erfindungsgemäßen Mehrkomponenten¬systems können auch weitere Zusätze Bestandteil des "Härters" sein, wie Wasser, organische Lösungsmittel, wie Benzylalkohol, Füllstoffe (z.B. wie oben genannte) und weitere der oben genannten Additive, beispielsweise in einem Gewichtanteil von insgesamt 0,01 bis 70 Gew.-%, z.B. von 1 bis 40 Gew.-%.

### Radikalisch härtbare Reaktiv-Kunstharze

Bei den (in den Ausführungsformen der Erfindung bevorzugten) radikalisch härtbaren Reaktiv-Kunstharzen handelt es sich in erster Linie um solche auf der Basis von radikalisch härtenden ungesättigten Reaktionsharzen, wie für die Reaktiv-Kunstharzkomponente (A) in Anspruch 1 oder einem abhängigen Anspruch definiert, und in einer separaten Komponente vorhandenen radikalbildenden Härtern, wie für die Härterkomponente (B) in Anspruch 1 definiert.

Vorzugsweise ist in allen Ausführungsformen der Erfindung zum Aushärten keine Wärmezufuhr und/oder (z.B. UV-) Lichtzufuhr von außen bei deren Verwendung erforderlich, das heißt, die Reaktion läuft insbesondere bei Umgebungstemperatur (z.B. Temperaturen zwischen -20 und 45 °C, z.B. bei 23 °C) ab und ohne zusätzliches Heizen oder Belichten mittels Heiz- oder Leuchtvorrichtungen und -Materialien.

Unter radikalisch härtenden ungesättigten Reaktionsharzen, die beispielsweise in einem Gewichtsanteil von 0,1 bis 90 Gew.-%, z.B. zwischen 0,5 und 75 Gew.-% oder zwischen 1 und 40 Gew.-% oder von 40 bis 65 Gew.-% vorliegen, sind die folgenden zu verstehen:
- Epoxy(meth)acrylate der Formel 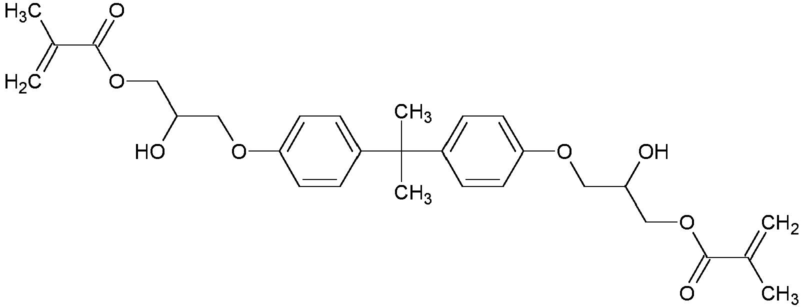 oder allgemeiner unter Berücksichtigung der Vorverlängerungsreaktion bei der Herstellung des Bisphenol-A-diglycidylethers der Formel 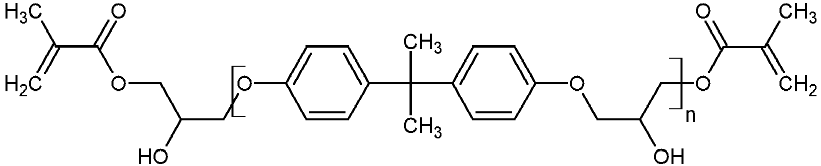 worin n für eine Zahl größer oder gleich 1 steht (wenn Gemische verschiedener Moleküle mit unterschiedlichen n-Werten vorliegen und durch die Formel repräsentiert werden, sind auch nicht-ganzzahlige Zahlen als Mittelwert möglich). Auch diese werden nachfolgend unter dem Begriff "Vinylester" subsumiert;
oder propoxylierte oder insbesondere ethoxylierte Bisphenol-A- (meth)acrylate der Formel 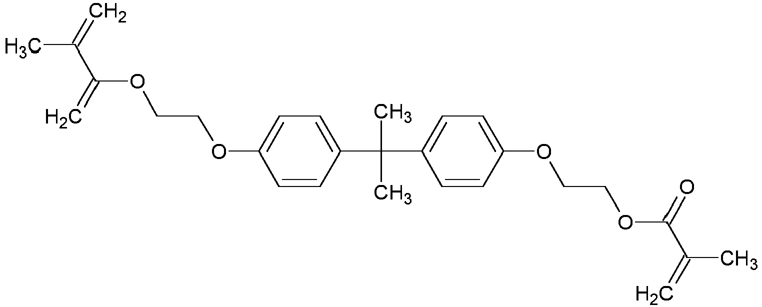 oder allgemein noch unter Berücksichtigung höherer Ethoxylierungsgrade: 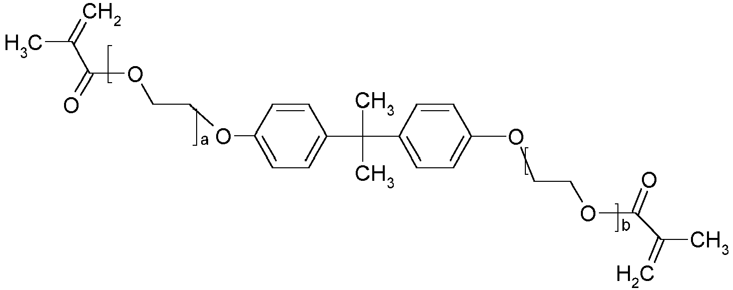 worin a und b jeweils unabhängig voneinander für eine Zahl größer oder gleich 0 stehen mit der Maßgabe, dass vorzugsweise mindestens einer der Werte größer als 0 ist, vorzugsweise beide 1 oder größer sind (wenn Gemische verschiedener Moleküle mit unterschiedlichen (a und b)-Werten vorliegen und durch die Formel repräsentiert werden, sind auch nicht-ganzzahlige Zahlen als Mittelwert möglich, für isoliert betrachtete Einzelmoleküle jeweils nur ganze Zahlen), oder die entsprechenden propoxylierten Verbindungen wie in Anspruch 1 definiert. Auch diese werden nachfolgend unter dem Begriff "Vinylester" subsumiert; und/oder
ein oder mehrere Urethan(meth)acrylate.

Wichtige Beispiele für weitere Inhaltsstoffe sind hier aminische Beschleuniger, Inhibitoren, nicht reaktive Verdünner, reaktive Verdünner, Thixotropiermittel, (andere als die bereits genannten, d.h., weitere) Füllstoffe und/oder weitere Additive.

Als aminische Beschleuniger kommen solche mit hinreichend hoher Aktivität in Frage, wie insbesondere (vorzugsweise tertiäre, insbesondere hydroxyalkylaminogruppensubstituierte) aromatische Amine ausgewählt aus der Gruppe, die aus epoxyalkylierten Anilinen, Toluidinen oder Xylidinen, wie z.B. ethoxyliertem Toluidin, Anilin oder Xylidin, beispielsweise N,N-bis(hydroxypropyl- oder hydroxyethyl)-toluidinen oder-xylidinen, wie N,N-bis(hydroxypropyl- oder hydroxyethyl)-p-toluidin, N,N-Bis(hydroxyethyl)-xylidin und ganz besonders entsprechenden höher alkoxylierten technischen Produkten, ausgewählt sind. Ein oder mehrere derartige Beschleuniger sind möglich. Die Beschleuniger haben, vorzugsweise einen Anteil (Konzentration) von 0,005 bis 10, insbesondere von 0,1 bis 5 Gew.-%.

Als Inhibitoren können beispielsweise nichtphenolische (anaerobe) und/oder phenolische Inhibitoren zugesetzt werden.

Als phenolische Inhibitoren (die oft als bereits zugemischter Bestandteil von käuflichen radikalisch härtenden Reaktionsharzen vorgesehen sind, aber ferner auch fehlen können) kommen (nicht-alkylierte oder alkylierte) Hydrochinone, wie Hydrochinon, ferner Mono-, Di- oder Trimethylhydrochinon, (nichtalkylierte oder alkylierte) Phenole, wie 4,4'-Methylen-bis(2,6-di-tert-butylphenol), 1,3,5-Trimethyl-2,4,6-tris(3,5-di-tert-butyl-4-hydroxy-benzyl-benzol, (nichtalkylierte oder alkylierte) Brenzcatechine wie tert.-Butylbrenzcatechin, 3,5-Di-tert-butyl-1,2-benzoldiol oder, oder insbesondere 4-Methoxyphenol, oder Gemische von zwei oder mehr davon, in Frage. Diese haben vorzugsweise einen Anteil von bis zu 1 Gew.-%, insbesondere zwischen 0,0001 und 0,5 Gew.-%, z.B. zwischen 0,01 und 0,1 Gew.-%.

Als nicht-phenolische oder anaerobe (d.h. im Gegensatz zu den phenolischen Inhibitoren auch ohne Sauerstoff wirksame) Inhibitoren (welche insbesondere die Aushärtezeiten kaum beein-flussen) kommen vorzugsweise Phenothiazin oder organische Nitroxylradikale in Betracht. Als organische Nitroxylradikale können beispielsweise solche zugesetzt sein, wie sie in der DE 199 56 509, die hier insbesondere bezüglich der darin genannten Verbindungen durch Bezugnahme inkorporiert wird, beschrieben sind, insbesondere 1-Oxyl-2,2,6,6-tetrame¬thyl-piperi¬din-4-ol ("4-OH-TEMPO" oder "TEMPOL"). Der Gewichtsanteil der nicht-phenolischen Inhibitoren liegt vorzugsweise, bezogen auf die Reaktionsharzformulierung, im Bereich von 1 ppm (Gew.) bis 2 Gew.-%, insbesondere z.B. im Bereich von 10 ppm bis 1 Gew.-%.

Als nicht reaktive Verdünner können beispielsweise Pflanzenöle, wie Rizinusöl, oder ferner Bioalkohole und Fettsäuren und deren Ester zugesetzt werden, oder Gemische von zwei oder mehr davon, beispielsweise in einem Anteil von 3 bis 60 Gew.-%, z.B. von 4 bis 55 Gew.-%.

Als Thixotropiermittel können übliche thixotropieverursachende Rheologiehilfsmittel verwendet werden, wie pyrogene Kieselsäure. Sie können z.B. in einem Gewichtsanteil von 0,01 bis 50 Gew.-%, beispielsweise von 0,5 bis 20 Gew.-%, zugesetzt werden.

Als weitere Füllstoffe (neben den erfindungsgemäßen Mehlen und Pulvern) finden übliche Füllstoffe, insbesondere Zemente (z.B. Portlandzemente oder Tonerdeschmelzzemente), Kreiden, Sand, Quarzsand, Quarzmehl oder dergleichen, die als Pulver, in körniger Form oder in Form von Formkörpern zugesetzt sein können, Verwendung, oder andere, oder Gemische davon, wobei die Füllstoffe ferner oder insbesondere auch silanisiert sein können. Die Füllstoffe können in einer oder in mehreren Komponenten eines erfindungsgemäßen mehrkomponentigen Kunstharz-Verklebungsmittels, beispielsweise einer oder beiden Komponenten eines entsprechenden Zweikomponentenkits, vorhanden sein; der Anteil an Füllstoffen beträgt vorzugsweise 0 bis 90 Gew.-%, beispielsweise 10 bis 50 Gew.-% (wobei auch beim Einbringen von Verankerungselementen zerstörtes Hüllmaterial (z.B. zersplittertes Glas oder zersplitterter Kunststoff), beispielsweise Scherben aus Patronen, mit als Füllstoff gerechnet werden kann). Zusätzlich oder alternativ zu ein oder mehreren der genannten Füllstoffe können hydraulisch härtbare Füllstoffe, wie Gips, Branntkalk oder Zement (z.B. Tonerd- oder Portlandzement), Wassergläser oder aktive Aluminiumhydroxide, oder zwei oder mehr davon, zugesetzt werden.

Auch weitere Additive können zugesetzt sein, wie Weichmacher, nicht reaktive Verdünnungsmittel, Flexibilisatoren, Stabilisatoren, Rheologiehilfsmittel, Netz- und Dispergiermittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, Gemische von zwei oder mehr davon. Derartige weitere Zusätze können vorzugsweise insgesamt in Gewichtsanteilen von insgesamt 0 bis 90 %, beispielsweise von 0 bis 40 Gew.-%, zugesetzt sein.

Als "reaktive Verdünner", z.B. zu bevorzugten Vinylestern, können zusätzlich auch ein oder mehrere (niedrigerviskose) radikalisch härtende ungesättigte Reaktivverdünner zugesetzt sein, worunter in erster Linie solche zu verstehen sind, die als radikalisch aushärtende (was "(z.B. vor Härterzugabe) aushärtbar" einschließt) Komponenten organische Verbindungen mit ungesättigten (z.B. olefinischen) Resten beinhalten oder insbesondere aus solchen Verbindungen bestehen, z.B. insbesondere (Meth)Acrylat-oder (Meth)-AcrylamidMonomere, wie Acrylsäure und/oder Methacrylsäure oder vorzugsweise deren Ester (als (Meth)acrylate bezeichnet) oder Amide, insbesondere (Meth)Acrylate wie Mono-, Di-, Tri- oder Poly (meth)-acrylate (einschließlich Hydroxyalkyl(meth)acrylaten, wie Hydroxypropyl(meth)acrylat oder Hydroxy-ethyl(meth)acrylat, Alkyl(meth)acrylate mit 1 bis 10 (Meth)acrylatgruppen, wie Mono-, Di-, Tri-, Tetra-, Penta-, Hexa- oder poly(meth)acrylate, z.B. Alkyldi- oder tri(meth)-acrylate, wie 1,2-Ethandioldi(meth)acrylat (Ethylenglykoldi(meth)acrylat), Butandioldi-(meth)acrylat, wie 1,3- oder insbesondere 1,4-Butandioldi(meth)acrylat, Hexandioldi(meth)-acrylat, 1,10-Decandioldi(meth)acrylat, Diethylglykol-di(meth)acrylat, Trimethylolpropantri(meth)acrylat, Glycerintri(meth)acrylat, Polyglycerinpoly(meth)acrylat, Polyethylenglykoldi(meth)acrylat, Cycloalkyl-, Bicycloalkyl- oder Heterocyclyl(meth)acrylate, worin Cycloalkyl oder Bicycloalkyl 5 bis 7 Ringkohlenstoffatome aufweist und Heterocyclyl 5 oder 6 Ringatome hat und 1 oder 2 Ringheteroatome ausgewählt aus N, O und S aufweist, wie Tetrahydrofurfuryl(meth)acrylat oder Isobornyl(meth)acrylat, oder Acetacetoxyalkyl-(meth)acrylat; oder ferner Styrole, wie Styrol, α-Methylstyrol, Vinyltoluol, tert.-Butylstyrol und/oder Divinylbenzol; oder Gemische von zwei oder mehr davon, als mit dem radikalisch härtenden ungesättigten Reaktionsharz parallel aushärtende Bestandteile vorgesehen sein, beispielsweise in einem Gewichtsanteil von 0,1 bis 90 Gew.-%, z.B. zwischen 0,5 und 75 Gew.-% oder zwischen 1 und 40 Gew.-%.

Der Härter beinhaltet mindestens ein Peroxid als eigentlichen Initiator. Der Begriff "Härter" bedeutet dabei hier vorzugsweise vor- und nachstehend reine Initiatoren oder phlegmatisierte Initiatoren mit oder ohne Füllstoffzusatz und/oder weitere Zusätze, wie Wasser, Verdickungs-mittel und/oder weitere Zusatzstoffe, wie Farbstoffe, Pigmente, Additive und dergleichen, mit anderen Worten, die komplette Härterkomponente. Zur Phlegmatisierung können übliche Zusätze, wie Gips, Kreide, pyrogene Kieselsäure, Phthalate, Chlorparaffin oder dergleichen, zugesetzt sein. Daneben können auch noch Füllstoffe und/ oder (insbesondere zur Herstellung einer Paste oder Emulsion) Lösungsmittel (nicht reaktive Verdünnungsmittel, wie z.B. flüssige (z.B. auch epoxidierte oder hydroxylgruppenhaltige) Öle, z.B. Rizinusöl, oder Wasser, Verdickungsmittel, Füllstoffe (wie z.B. oben genannte) und weitere der oben genannten Zusätze zugesetzt sein, wobei Wasser als Härter für die Kondensation der hydrolysierbare Gruppen beinhaltenden Silane dienen kann. Der Anteil aller Zusätze kann beispielsweise bei einem Gewichtsanteil von insgesamt 0,1 (insbesondere 10) bis 99,5 Gew.-%, z.B. von 1 (insbesondere 10) bis 99,1 Gew.-%, liegen.

Bezogen auf die Härterkomponente liegt der Anteil des Initiators (eigentlicher Härter) in einer möglichen bevorzugten Ausführungsform der Erfindung bei 0,5 bis 90 Gew.-%, insbesondere bei 0,9 bis 30 Gew.-%.

Als Initiator für die Härtung der erfindungsgemäßen Reaktionsharzformulierungen finden im Falle der radikalischen Polymerisation z.B. radikalbildende Peroxide, z.B. organische Peroxide, wie Diacylperoxide, z.B. Dibenzoylperoxid, Ketonperoxide, wie Methylethylketon-peroxid oder Cyclohexanonperoxid, oder Alkylperester, wie tert-Butylperbenzoat, anorganische Peroxide, wie Persulfate oder Perborate, sowie Mischungen davon Verwendung.

Der Anteil des Härters an einem erfindungsgemäßen Kunstharz-Verklebungsmittel liegt dabei vorzugsweise, bezogen auf die Masse (Gewicht) aller Reaktanden und Zusätze ohne Verpackung, in einem Bereich von 1 bis 60 Gew.-%, z.B. 2 bis 50 Gew.-%, wobei der Anteil an Per¬oxid, ebenfalls bezogen auf die Masse der gesamten zugehörigen Reaktionsharzformulierung (100 %), bei 0,1 oder mehr Gew.-%, in einer besonders bevorzugten Ausführungsform bei 0,1 bis < 1 Gew.-%, ferner auch bei 1 bis 10 Gew.-%, liegen kann.

Das radikalisch härtbare ungesättigte Reaktionsharz (bzw. die Gesamtmenge seiner Komponenten) ist beispielsweise in einem Gewichtsanteil von 5 bis 99,5 %, wie etwa von 10 bis 98,5, z.B. 10 bis 89,5 %, vorgesehen.

"Auf Basis" bedeutet auch hier, dass die erfindungsgemäßen Kunstharz-Verklebungsmittel neben den genannten Komponenten auch weitere übliche Inhaltsstoffe (z.B. Additive oder andere wie oben oder unten genannte Bestandteile) beinhalten können. Diese weiteren Inhaltsstoffe können zusammen beispielsweise in einer Menge von insgesamt bis zu 80, vorzugsweise zwischen 0,01 und 65 Gew.-%, vorliegen. Auch wo nicht ausdrücklich "auf Basis" erwähnt wird, sind derartige übliche Inhaltsstoffe mit beinhaltet.

Unter einem Loch oder Spalt ist ein solches Loch oder ein solcher Spalt zu verstehen, das oder der in einem festen (insbesondere bereits als solcher fertiggestellten) Untergrund (Substrat), insbesondere Mauerwerk oder Beton, ggf. auch in einem rissigen Substrat, wie rissigem Beton, vorhanden und von mindestens von einer Seite her zugänglich ist, beispielsweise ein Bohrloch, oder ferner ein beim Mörteln mit anorganischen Mörtel- oder Putzmassen (wie mit Zement oder Gips) ausgesparter Bereich oder dergleichen.

In einer besonderen Ausführungsform der Erfindung sind die härtbaren Komponenten und die zugehörigen Härter (Härterkomponenten) voneinander getrennt in einem Zwei- oder Mehrkomponentensystem aufbewahrt, bevor sie am gewünschten Ort (z.B. bei oder in einem Loch oder Spalt, wie Bohrloch) miteinander vermischt werden.

Die erfindungsgemäßen Injektions-Kunstharzsysteme sind als Mehr-Komponentensysteme (z.B. Mehrkomponentenkit) vorgesehen und werden auch als solche verwendet.

Unter einem Mehrkomponentenkit ist insbesondere ein Zwei- oder (ferner) Mehrkomponentenkit (vorzugsweise ein Zweikomponentenkit) mit einer Komponente (A), welche entweder ein oder mehrere radikalisch härtbare (= nach Zugabe eines Radikalbildners (Härter) härtende) Reaktiv-Kunstharze oder ein oder mehrere Reaktiv-Kunstharze auf Epoxidbasis beinhaltet, wie oben und unten beschrieben und in Anspruch 1 definiert, und den jeweils zugehörigen Härter (Komponente (B)) wie oben und nachfolgend und in Anspruch 1 definiert, wobei weitere Zusätze in einer oder beider der Komponenten vorgesehen sein können, vorzugsweise eine Zwei- oder ferner Mehrkammervorrichtung, zu verstehen, worin die miteinander reaktionsfähigen Komponenten (A) und (B) und ggf. weitere separate Komponenten so enthalten sind, dass ihre Bestandteile während der Lagerung nicht (insbesondere unter Aushärtung) miteinander reagieren können, vorzugsweise so, dass ihre Bestandteile vor der Anwendung nicht miteinander in Berührung kommen, das es jedoch ermöglicht, die Komponenten (A) und (B) und gegebenenfalls weitere Komponenten zur Befestigung an der gewünschten Stelle, beispielsweise direkt vor oder in einem Loch, so zu vermischen und erforderlichenfalls einzubringen, dass dort die Härtungsreaktion stattfinden kann. Auch geeignet sind Patronen, beispielsweise aus Kunststoff, Keramik oder insbesondere Glas, in denen die Komponenten durch (beispielsweise bei Eintreiben eines Verankerungselements in ein Loch oder einen Spalt, wie ein Bohrloch) zerstörbare Abgrenzungswandungen oder integrierte separate zerstörbare Behältnisse voneinander getrennt angeordnet sind, beispielsweise als ineinander verschachtelte Patronen, wie Ampullen; sowie insbesondere Mehr- oder insbesondere Zweikomponenten¬kar¬tuschen (die ebenfalls besonders bevorzugt sind), in deren Kammern die mehreren oder vorzugsweise zwei Komponenten (insbesondere (A) und (B)) des erfindungsgemäßen Kunstharz-Verklebungsmittels mit oben und nachstehend genannten Zusammensetzungen zur Aufbewahrung vor der Nutzung enthalten sind, wobei vorzugsweise auch ein Statikmischer zum entsprechenden Kit gehört.

Vorteilhaft können die Verpackungsmaterialien (wie Folien, Kartuschen (auch Statikmischer) oder Kunststoffpatronen) ebenfalls aus Kunststoffen mit hohem oder vollständigem biogenem Kohlenstoffanteil ausgeführt sein, beispielsweise aus entsprechenden Polyamiden oder dergleichen.

Die Verwendung eines erfindungsgemäßen Kunstharz-Verklebungsmittels am gewünschten Einsatzort erfolgt durch Mischen der zugehörigen (vor Mischung reaktionshemmend separierten) Komponenten, insbesondere nahe bei und/ oder direkt vor einem Loch oder (beispielsweise insbesondere bei Verwendung von Kartuschen mit Statikmischern) direkt vor und/oder (insbesondere beim Zerstören entsprechender Patronen oder Ampullen) innerhalb eines Loches oder Spaltes, z.B. einem Bohrloch.

Unter "Einmörteln" ist insbesondere eine (stoff- und/oder formschlüssige) Befestigung von Verankerungsmitteln aus Metall (z.B. Hinterschneidanker, Gewindestangen, Schrauben, Bohranker, Bolzen) oder ferner aus einem anderen Material, wie Kunststoff oder Holz, in festen (vorzugsweise bereits als solche fertiggestellten) Substraten, wie Beton oder Mauerwerk, insbesondere, soweit sie Bestandteile von künstlich errichteten Bauwerken sind, vor allem Mauerwerk, Decken, Wände, Böden, Platten, Pfeilern oder dergleichen (z.B. aus Beton, Naturstein, Mauerwerk aus Vollsteinen oder Lochsteinen, ferner Kunststoff oder Holz), insbesondere in Löchern, wie Bohrlöchern, zu verstehen. Mittels dieser Verankerungsmittel können dann beispielsweise Geländer, Abdeckungselemente, wie Platten, Fassadenelemente oder andere Bauelemente befestigt werden.

Wo von "Gemischen von zwei oder mehr davon" die Rede ist, beinhaltet dies insbesondere Gemische von mindesten einem der genannten Bestandteile, die als bevorzugt hervorgehoben sind, mit ein oder mehreren anderen, insbesondere ein oder mehreren ebenfalls als bevorzugt gekennzeichneten Komponenten.

"Als solche fertiggestellt" bedeutet insbesondere, dass die Substrate bis auf mögliche Oberflächenmodifikationen (wie Beschichtung, z.B. Verputzen oder Lackieren) oder dergleichen bereits fertiggestellt (z.B. als Bausteine oder Mauern) und nicht erst gleichzeitig mit dem Verklebungsmittel fertiggestellt werden oder aus diesem bestehen. Mit anderen Worten: Das Verklebungsmittel ist dann nicht selbst bereits fertiggestelltes Substrat.

Die Einbringung des oder der Verankerungsmittel(s) erfolgt vorzugsweise bereits kurze Zeit, vorzugsweise 30 Minuten oder weniger, nach dem Mischen der Komponenten des erfindungsgemäßen Befestigungsmörtels. Zur Erläuterung: Mit der Mischung und Einbringung der Komponenten auf oder in die gewünschten Stellen, an denen Verankerungsmittel befestigt werden sollen, beginnen mehrere, im Wesentlichen parallel und/oder nur mit geringer zeitlicher Versetzung ablaufende Reaktionen. Die endgültige Aushärtung erfolgt in situ.

Mittels des folgenden Testsystems (insbesondere wie in den Beispielen weiter präzisiert) lassen sich folgende Bereiche für die Verbundspannung finden: Mehr als 10 N/mm², z.B. 10 bis 100 N/mm², wie beispielsweise 12 bis 50 N/mm², z.B. 15 bis 30 N/mm².

Die Verbundspannung wird ermittelt durch Auszugsversuche von Ankerstangen M12 aus Beton (C20/C25) mit einer Setztiefe von 95 mm und einem Bohrlochdurchmesser von 14 mm nach einer Aushärtezeit von 60 min bei 20 °C.

Spezifische Ausführungsformen der Erfindung betreffen auch die in den Ansprüchen und der Zusammenfassung aufgeführten Varianten - die Ansprüche und die Zusammenfassung werden hier daher durch Bezugnahme aufgenommen.

Die nachfolgenden Beispiele dienen der Illustration der Erfindung, ohne ihren Umfang einzuschränken, stellen jedoch ebenfalls Ausführungsformen der Erfindung dar (wobei auch jeder einzelne spezifisch genannte Bestandteil in einem der vor- und nachstehend genannten Erfindungsgegenstände anstelle eines allgemeinen Begriffs stehen kann, oder mehrere oder alle, was spezielle Ausführungsformen der Erfindung definiert).

Abkürzungen:
EOBADMA: Ethoxyliertes Bisphenol-A-dimethacrylat
BDDMA: Butandioldimethacrylat
t-BBC: tert-Butyl-brenzcatechin
FIS V: FIS V 360 S (fischerwerke GmbH & Co. KG, Waldachtal, Deutschland)

Beispiel 1: In ein Basisharz aus 66,67 % EOBADMA und 33,33 % BDDMA wurden die entsprechenden Mengen der Mehle eingearbeitet und die Viskosität mit einem Brookfield-Viskosimeter bei 23 °C bestimmt. Es wurde eine Spindel 3 bei 20 U/min bis ca. 10.000 mPas und darüber eine Spindel 7 bei 10 U/min eingesetzt.

Messwerte in mPas:

| **Konzentration [Gew-%]** | **Olivenkernmehl M200 (bevorzugt)** | **Kokosnussschalenmehl (bevorzugt)** | **Rehofix MK300** | **Jeluxyl Haho** | **Arbocel Type C750FP** | **Lignocel C120** |
|---|---|---|---|---|---|---|
| 12,2 | 140 | 145 | 160 | 750 | 1720 | 2000 |
| **23,4** | **300** | **285** | **600** | **Messung nicht mehr möglich** | **156000*** | **141000*** |
| 34,6 | 845 | 800 | 15.400 | | | |
| 41,4 | 6405 | 3670 | Messung nicht mehr möglich | | | |
| 46,9 | 18.000 | 14.400 | | | | |
| 51,4 | 48.800 | 35.000 | | | | |

| | | | | | | |
|---|---|---|---|---|---|---|
| * = Mörtel zu trocken und bröselig, nicht mehr fließfähig | | | | | | |

Folgende Materialien wurden verwendet:

| **Füllstoff** | **Type** | **Lieferant** |
|---|---|---|
| Olivenkernmehl | Olivenkernmehl M200 | Fa. A+S BioTec, Völklingen |

| | | |
|---|---|---|
| Kokosnussschalenmehl | Coconit 200 | Mahlwerk Neubauer-Friedrich Geffers GmbH, Hamburg |
| Pflanzenschrot | Rehofix MK300 | J. Rettenmaier & Söhne GmbH & Co., Rosenberg |
| Hartholzpulver | Jeluxyl HaHo 120/f. Arbocel Type C 750 | JELU-WERK J. Ehrler GmbH & Co. KG, Rosenberg |
| Rohcellulose Holzfasern aus | FP | J. Rettenmaier & Söhne GmbH & Co., Rosenberg |
| Nadelholz | Lignocel C120 | J. Rettenmaier & Söhne GmbH & Co., Rosenberg |

Es ist ersichtlich, dass gute Füllgrade nur mit den Mehlen erreicht wurden und andere Füllstoffe schon bei sehr niedrigen Füllgraden zu unbrauchbaren Mörteln führten.

Mechanische Charakterisierung:
Für die Bestimmung der Gelierzeiten und die Herstellung der Druck- und Zugprüfkörper wurde ein Standardmörtel mit 76,6 % Flüssigkomponente (BDDMA/E2BADMA) und 23,4 % biobasierter Füllstoff (Mörtel aus Zeile 2 (fett hervorgehoben) in obiger Tabelle) hergestellt, zu diesem wurde 0,7 % eines aminischen Beschleunigers zugegeben.

50 g der jeweiligen Mörtel wurden mit 9,1 g eines Härters mit einem Dibenzoylperoxidgehalt von 5,3 Gew.-% vermischt und Prüfkörper erstellt.

### Ergebnisse Zug, gemessen

### nach DIN EN ISO 527 an Prüfkörpern 1BA

| **Mörtel mit biobasiertem Füllstoff** | **Zugfestigkeit [MPa]** | **Zugmodul [GPa]** | **Dehnung bei Zugfestigkeit [%]\** |
|---|---|---|---|
| Olivenkernmehl M200 | 23,2 | 2,5 | 1,1 |
| Coconit 200 | 18,1 | 2,4 | 0,9 |
| Lignocel C 120 | 17,8 | 2,5 | 0,8 |
| Rheofix MK 300 | 12,2 | 2,2 | 0,6 |
| Jeluxyl Haho 120 | 12,6 | 2,2 | 0,6 |
| Arbocel Type C750FP | 19,0 | 2,51 | 0,8 |
| Vergleich: FIS V | 10,0 | 4,3 | 0,5 |

Ergebnis: Mit allen Füllstoffen wurden gute bis sehr gute Zugfestigkeiten gefunden, wobei die mit den Mehlen im oberen Bereich liegen bzw. im Falle von Olivenkernmehl am höchsten sind. Die Dehnung bei Zugfestigkeit war mit den Mehlen am höchsten.

Gelierzeit:
Für die Bestimmung wurde 50,0 g Mörtel und 9,1 g Härter wie oben genannt eingewogen, 1 min homogenisiert und die Verfestigung bei 23 +/-1 °C gemessen.

| **Mörtel mit biobasiertem Füllstoff** | **Gelierzeit [mm:ss]** |
|---|---|
| Olivenkernmehl M200 | 04:11 |
| Coconit 200 | 03:45 |
| Lignocel C 120 | 06:30 |
| Rheofix MK 300 | 04:42 |
| Jeluxyl Haho 120 | 04:36 |
| Arbocel Type C750FP | 04:43 |

Im Ergebnis zeigen sich im Wesentlichen gleiche Gelierzeiten (und folglich keine Hinweise auf eine inhibierende Wirkung oder einen Einfluss des Füllstofftyps).

### Beispiel 2: Beispielrezeptur 1:

| **Mörtelkomponente 1** | | |
|---|---|---|
| | **Rohstoff** | **Einsatzmenge [Gew.-%]** |
| | Tetrahydrofurfurylmethacrylat Sarbio 6100 | 9,90 |
| | Ethoxyliertes Bisphenol-A-dimethacrylat | 19,00 |
| | Inhibitorenmischung (t-BBC, TEMPOL) | 0,05 |
| | Aminbeschleuniger | 0,65 |
| | pyrogene oberflächenbehandelte Kieselsäure | 1,50 |
| | Quarzmehl | 41,90 |
| | Olivenkernmehl | 27,00 |
| | | 100,00 |

Der Mörtel hat eine Dichte von 1,58 g/ccm und eine Viskosität von 160 Pa*s bei 23 °C, gemessen mit Brookfield Spindel 7 bei 10 U/min. Der Biokohlenstoffgehalt liegt bei 50,5 %.

| **Härterkomponente 1** | | |
|---|---|---|
| | **Rohstoff** | **Einsatzmenge [Gew.-%]** |
| | Rizinusöl | 40,00 |
| | Dibenzoylperoxid 33 % in inertem Füllstoff | 16,00 |
| | Quarzsand | 41,50 |
| | pyrogene oberflächenbehandelte Kieselsäure | 2,00 |
| | Pigment | 0,50 |
| | | 100,00 |

Der Härter hat eine Dichte von 1,50 g/ccm und eine Viskosität von 120 Pa*s bei 23 °C, gemessen mit Brookfield Spindel 7 bei 10 U/min. Der Biokohlenstoffgehalt liegt bei 88,9 %.

Messung der Verbundspannung:
Eine 5:1-Coaxialkartusche aus Biopolyamid 6.10 (58 % Bio-C) wird mit ca. 390 g des Mörtels und mit ca. 74 g des Härters befüllt. Der Injektionsmörtel (Härterkomponente (Komponente (B)) und Mörtelkomponente 1 (Komponente (A)) zusammen) hat einen Biokohlenstoffgehalt von 56,5 %.

Auszugswerte: Die Verbundspannung wird ermittelt durch Auszugsversuche von Ankerstangen M12 aus Beton (C20/C25) mit einer Setztiefe von 95 mm und einem Bohrlochdurchmesser von 14 mm nach einer Aushärtezeit von 60 min bei 20 °C. Es wird eine Verbundspannung von 18,6 N/mm² erhalten.

### Beispielrezeptur 2:

| **Mörtelkomponente 2** | | |
|---|---|---|
| | **Rohstoff** | **Einsatzmenge [Gew.-%]** |
| | 1,10-Dekandioldiacrylat (Sarbio 5201) | 11,50 |
| | Ethoxyliertes Bisphenol-A-dimethacrylat | 19,00 |
| | Inhibitorenmischung (t-BBC, TEMPOL) | 0,05 |
| | Aminbeschleuniger | 0,65 |
| | pyrogene oberflächenbehandelte Kieselsäure | 1,50 |
| | Quarzmehl | 40,30 |
| | Kokosnussschalenmehl Coconit 200 | 27,00 |
| | | 100,00 |

Der Mörtel hat eine Dichte von 1,56 g/ccm und eine Viskosität von 145 Pa*s bei 23 °C, gemessen mit Brookfield Spindel 7 bei 10 U/min. Der Biokohlenstoffgehalt liegt bei 51 %.

Messung der Verbundspannung:
Eine 5:1-Coaxialkartusche aus Biopolyamid 6.10 (58 % Bio-C) wird mit ca. 385 g der Mörtelkomponente und mit ca. 74 g der Härterkomponente 1 befüllt. Der Injektionsmörtel (Härterkomponente (Komponente (B)) und Mörtelkomponente 1 (Komponente (A)) aus Beispiel 1 zusammen) hat einen Biokohlenstoffgehalt von 56,9 %. Hier wird eine Verbundspannung von 18,3 N/mm² erhalten.

### Beispiel 3:

| | | |
|---|---|---|
| Mörtelkomponente 3 | | |
| | Rohstoff | Einsatzmenge [Gew.-%] |
| | Bisphenol-A/F-Harz (Bio-C-Gehalt 28 %) | 45 |
| | Trimethylolpropantriglycidylether | 15 |
| | Netz- und Dispergiermittel | 2 |

| | | |
|---|---|---|
| | Pigment | 0,5 |
| | pyrogene oberflächenbehandelte Kieselsäure | 2 |
| | Quarzmehl | 10,5 |
| | Kokosnussschalenmehl | 25 |
| | | 100,00 |

Der Mörtel hat eine Dichte von 1,31 g/ccm und eine Viskosität von 140 Pa*s bei 23 °C, gemessen mit Brookfield Spindel 7 bei 10 U/min. Der Biokohlenstoffgehalt liegt bei 39 %.

| | | |
|---|---|---|
| Härterkomponente 2 | | |
| | Rohstoff | Einsatzmenge [Gew.-%] |
| | Mannichbasenformulierung | 60 |
| | Pflanzenkohle | 37,5 |
| | pyrogene oberflächenbehandelte Kieselsäure | 2,00 |
| | Pigment | 0,50 |
| | | 100,00 |

Der Härter hat eine Dichte von 1,28 g/ccm und eine Viskosität von 160 Pa*s bei 23 °C, gemessen mit Brookfield Spindel 7 bei 10 U/min. Der Biokohlenstoffgehalt liegt bei 38 %.

Messung der Verbundspannung:
Eine 3:1-Coaxialkartusche aus Biopolyamid 6.10 (58 % Bio-C) wird mit ca. 393 g des Mörtels und mit ca. 130 g des Härters befüllt. Die ermittelt Verbundspannung beträgt 24,7 N/mm²

## Patentansprüche

1. Verwendung eines Kunstharz-Verklebungsmittels zum Einmör¬teln von Verankerungsmitteln in Löcher oder Spalten, insbesondere in Bohrlöchern, bei dem das Kunstharz-Verklebungsmittel und ein Verankerungs-mittel in ein Loch oder einen Spalt, auch in einem rissigen Substrat, wie rissigem Beton, eingebracht werden und das Kunstharz-Verklebungsmittel zum Aushärten gebracht wird, wobei das Kunstharz-Verklebungsmittel mehrkomponentig ist und ein oder mehrere Füllstoffe beinhaltet, wobei es einen biogenen Füllstoff beinhaltet, wobei das mehrkomponentige Kunstharz-Verklebungsmittel
in einer Reaktiv-Kunstharzkomponente (A) Epoxy(meth)acrylate der Formel 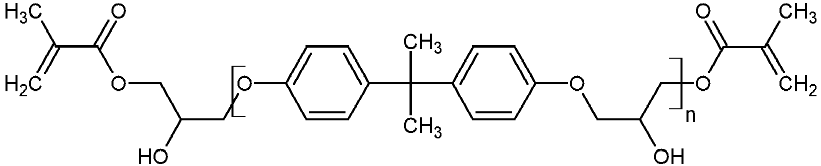 worin n für eine Zahl größer oder gleich 1 steht, und/oder
ethoxylierte aromatische Diol-(meth)acrylate der Formel 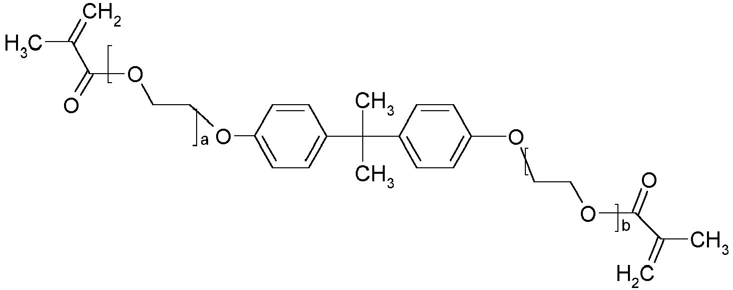 und/oder propoxylierte Analoge, worin anstelle der Gruppe [-O-CH₂-CH₂-] jeweils eine Gruppe [-O-CH₂-CH₂-CH₂-] vorliegt, worin a und b jeweils unabhängig voneinander für eine Zahl größer oder gleich 0 stehen mit der Maßgabe, dass vorzugsweise mindestens einer der Werte größer als 0 ist, und/oder
ein oder mehrere Urethan(meth)acrylate,
und als Härterkomponente (B) eine solche mit einem Peroxid als Initiator beinhaltet;
oder dass es als Reaktiv-Kunstharzkomponente (A) ein Reaktiv-Kunstharz auf Epoxidharzbasis sowie eine Härterkomponente (B) beinhaltet;
wobei das Kunstharz-Verklebungsmittel als biogenen Füllstoff Mehle, Kleien, Zucker, (Poly)saccharide, Pflanzenfasern, Alkyl(poly)glykoside, Tannine, Lignine, Ligninsulfonate oder Latex, oder Mischungen von zwei oder mehr davon, oder biogene Kohle, beinhaltet.

2. Verwendung eines Kunstharz-Verklebungsmittels nach Anspruch 1, **dadurch gekennzeichnet, dass** es als biogenen Füllstoff Olivenkernmehl, Kokosnussschalenmehl, Walnussschalenmehl, Haselnussschalen¬mehl, Mandelmehl, Pfirsichkernmehl, Aprikosenkernmehl oder Kirschkernmehl, oder Mischungen von zwei oder mehr davon, beinhaltet.

3. Verwendung eines Kunstharz-Verklebungsmittels nach Anspruch 2, **dadurch gekennzeichnet, dass** es als biogenen Füllstoff Olivenkernmehl oder Kokosnussschalenmehl, oder Mischungen davon, beinhaltet.

4. Verwendung eines Kunstharz-Verklebungsmittels nach einem der Ansprüche 1 bis 3, **dadurch gekennzeichnet, dass** der biogene Füllstoff insgesamt in einem Anteil von 5 bis 80 Gew.-% an dem Kunstharz-Verklebungsmittel vorgesehen ist und dass es sich um ein Zweikomponentenkit handelt, mit einer Reaktiv-Kunstharzkomponente (A) und einer Härterkomponente (B), wobei es vorzugsweise den biogenen Füllstoff in der Kunstharzkomponente (A) enthält.

5. Verwendung eines Kunstharz-Verklebungsmittels nach einem der Ansprüche 1 bis 4, **dadurch gekennzeichnet, dass** es als Reaktiv-Kunstharzkomponente (A) die Epoxy(meth)acrylate und/oder die propoxylierten oder ethoxylierten aromatischen Diol-(meth)acrylate der Formeln gemäß Anspruch 1 und als Härterkomponente (B) eine solche mit einem Peroxid als Initiator beinhaltet.

6. Kunstharz-Verklebungsmittel wie in einem der Ansprüche 1 bis 4 definiert, **dadurch gekennzeichnet, dass** das oder die härtbaren Reaktivharz(e) auf Epoxidbasis in der Reaktiv-Kunstharzkomponente (A) als Epoxid Polyglycidylether von Novolak, Bisphenol F oder Bisphenol A, oder Gemische solcher Epoxide, beinhaltet, bevorzugt mit oder ferner ohne einen reaktiven Verdünner, und in der Härterkomponente (B) als Härter solche mit zwei oder mehr Gruppen ausgewählt aus Amino, Imino, und Mercapto, beispielsweise entsprechende Amine oder Thiole, oder ferner Thioalkohole, Aminoalkohole oder Amino¬thiole, oder Gemische solcher Verbindungen, beinhaltet.

7. Verwendung eines Kunstharz-Verklebungsmittels nach einem der Ansprüche 1 bis 6, **dadurch gekennzeichnet, dass** es ein oder mehrere weitere Additive, insbesondere ausgewählt aus aminischen Beschleunigern, Inhibitoren (nur im Falle der radikalisch härtbaren Reaktivharze), reaktiven Verdünnern , Thixotropiermitteln, weiteren Füllstoffen und ferner weiteren Additiven, wie ausgewählt aus Weichmachern, nicht reaktiven Verdünnungsmitteln, reaktiven Verdünnungsmitteln, Flexibiliatoren, Stabilisatoren, Rheologiehilfsmitteln, Netz- und Dispergier mitteln und färbenden Zusätzen, beinhaltet.

8. Verwendung eines Kunstharz-Verklebungsmittel nach einem der Ansprüche 1 bis 7, **dadurch gekennzeichnet, dass** es sich um ein Zwei-Komponenten-System in Form einer Zwei-Kammer-Kartusche ohne oder mit Statikmischer handelt.

9. Verwendung eines Kunstharz-Verklebungsmittels nach einem der Ansprüche 1 bis 8 zum Einmör¬teln von Verankerungsmitteln in feuchten Bohrlöchern, bei dem das Kunstharz-Verklebungsmittel und ein Verankerungs-mittel in ein Loch oder einen Spalt, auch in rissigem Beton, eingebracht werden und das Kunstharz-Verklebungsmittel zum Aushärten gebracht wird.

10. Verfahren zum Einmörteln von Verankerungselementen und Löchern oder Spalten, bei denen ein Kunstharz-Verklebungsmittel wie in einem der Ansprüche 1 bis 8 definiert zum Einmörteln von Verankerungs¬mitteln verwendet wird, wobei das Kunstharz-Verklebungsmittel und ein Verankerungsmittel in ein Loch oder einen Spalt eingebracht werden und das Kunstharz-Verklebungsmittel zum Aushärten gebracht wird.

## Claims

1. Use of a synthetic resin adhesive composition for embedding anchoring means in mortar in holes or crevices, especially in drilled holes, wherein the synthetic resin adhesive composition and an anchoring means are introduced into a hole or crevice, including in a cracked substrate, such as cracked concrete, and the synthetic resin adhesive composition is caused to cure, wherein the synthetic resin adhesive composition is multi-component and comprises one or more fillers, wherein the adhesive composition comprises a biogenic filler, wherein the multi-component synthetic resin adhesive composition comprises,
in a reactive synthetic resin component (A), epoxy(meth)acrylates of formula 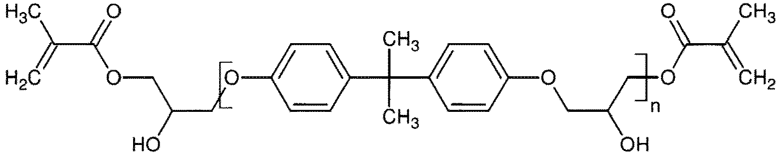 in which n denotes a number greater than or equal to 1, and/or
ethoxylated aromatic diol-(meth)acrylates of formula 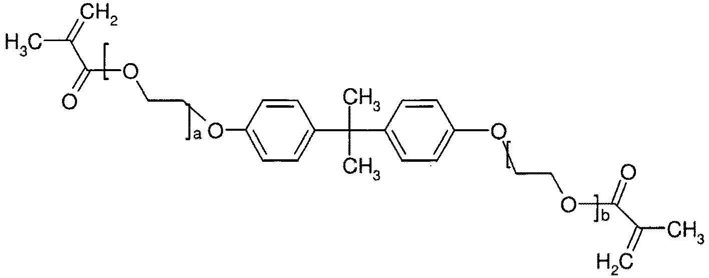 and/or propoxylated analogues, in which instead of the group [-O-CH₂-CH₂-] there is in each case present a group [-O-CH₂-CH₂-CH₂-], in which a and b each independently of the other denote a number greater than or equal to 0, with the proviso that preferably at least one of the values is greater than 0, and/or
one or more urethane(meth)acrylates,
and, as hardener component (B), such a component having a peroxide as initiator;
or it comprises, as reactive synthetic resin component (A), a reactive synthetic resin based on epoxy resin, and also a hardener component (B);
wherein the synthetic resin adhesive composition comprises, as biogenic filler, flours, brans, sugars, (poly)saccharides, plant fibres, alkyl (poly)glycosides, tannins, lignins, lignin sulfonates or latex, or mixtures of two or more thereof, or biogenic charcoal.

2. Use of a synthetic resin adhesive composition according to claim 1, **characterised in that** it comprises, as biogenic filler, olive stone flour, coconut shell flour, walnut shell flour, hazelnut shell flour, almond flour, peach stone flour, apricot stone flour or cherry stone flour, or mixtures of two or more thereof.

3. Use of a synthetic resin adhesive composition according to claim 2, **characterised in that** it comprises, as biogenic filler, olive stone flour or coconut shell flour, or mixtures thereof.

4. Use of a synthetic resin adhesive composition according to any one of claims 1 to 3, **characterised in that** the biogenic filler, in total, is provided in a proportion of from 5 to 80 % by weight of the synthetic resin adhesive composition; and it is a two-component kit, having a reactive synthetic resin component (A) and a hardener component (B), preferably comprising the biogenic filler in the synthetic resin component (A).

5. Use of a synthetic resin adhesive composition according to any one of claims 1 to 4, **characterised in that** it comprises, as reactive synthetic resin component (A), the epoxy(meth)acrylates and/or the propoxylated or ethoxylated aromatic diol(meth)-acrylates of the formulae according to claim 1 and, as hardener component (B), such a component having a peroxide as initiator.

6. Synthetic resin adhesive composition as defined in any one of claims 1 to 4, **characterised in that** the hardenable reactive resin(s) based on epoxy in the reactive synthetic resin component (A) comprise(s), as epoxy, polyglycidyl ethers of novolak, bisphenol F or bisphenol A, or mixtures of such epoxides, preferably with or furthermore without a reactive diluent, and, in the hardener component (B), as hardener, those having two or more groups selected from amino, imino and mercapto, for example corresponding amines or thiols, or furthermore thioalcohols, aminoalcohols or aminothiols, or mixtures of such compounds.

7. Use of a synthetic resin adhesive composition according to any one of claims 1 to 6, **characterised in that** it comprises one or more further additives, especially selected from aminic accelerators, inhibitors (only in the case of free-radical-hardenable reactive resins), reactive diluents, thixotropic agents, further fillers and furthermore further additives, such as selected from plasticisers, non-reactive diluting agents, reactive diluting agents, flexibilisers, stabilisers, rheology aids, wetting and dispersing agents and colouring additives.

8. Use of a synthetic resin adhesive composition according to any one of claims 1 to 7, **characterised in that** it is a two-component system in the form of a two-chamber cartridge with or without a static mixer.

9. Use of a synthetic resin adhesive composition according to any one of claims 1 to 8 for embedding anchoring means in mortar in moist drilled holes, in which the synthetic resin adhesive composition and an anchoring means are introduced into a hole or crevice, including in cracked concrete, and the synthetic resin adhesive composition is caused to cure.

10. Method for embedding anchoring elements in mortar in holes or crevices, in which a synthetic resin adhesive composition as defined in any one of claims 1 to 8 is used for embedding anchoring means in mortar, the synthetic resin adhesive composition and an anchoring means being introduced into a hole or crevice and the synthetic resin adhesive composition being caused to cure.

## Revendications

1. Utilisation d'un agent adhésif à base de résine synthétique pour sceller au mortier des moyens d'ancrage dans des trous ou des fentes, en particulier dans des trous de forage, dans laquelle l'agent adhésif à base de résine synthétique et un moyen d'ancrage sont introduits dans un trou ou dans une fente, également dans un substrat fissuré, tel que du béton fissuré et l'agent adhésif à base de résine synthétique est amené à durcir, l'agent adhésif à base de résine synthétique étant à plusieurs composants et comportant une ou plusieurs charges, l'agent comportant une charge biogène, l'agent adhésif à base de résine synthétique à plusieurs composants comportant, dans un composant de résine synthétique réactive (A), des époxy(méth)acrylates de formule 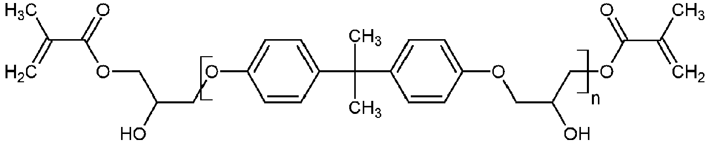 dans laquelle n représente un nombre supérieur ou égal à 1, et/ou des (méth)acrylates de diol éthoxylés aromatiques de formule 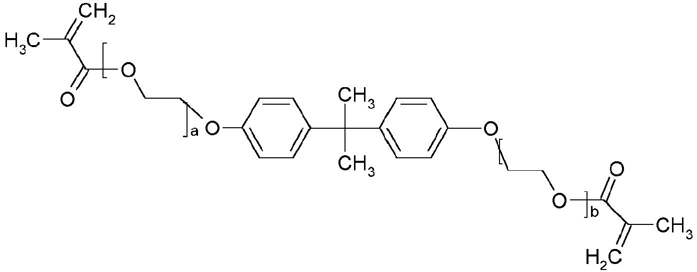 et/ou des analogues propoxylés, dans lesquels un groupe [-O-CH₂-CH₂-] est à chaque fois remplacé par un groupe [-O-CH₂-CH₂-CH₂-] , a et b représentent, à chaque fois indépendamment l'un de l'autre, un nombre supérieur ou égal à 0, à condition que de préférence au moins l'une des valeurs soit supérieure à 0,
et/ou un ou plusieurs uréthane-(méth)acrylates, et, comme composant durcisseur (B), un composant présentant un peroxyde comme initiateur ;
ou en ce que l'agent comporte, comme composant à base de résine synthétique réactive (A), une résine synthétique réactive à base de résine d'époxyde ainsi qu'un composant durcisseur (B) ;
l'agent adhésif à base de résine adhésive comportant, comme charge biogène, des farines, des sons, des sucres, des (poly)saccharides, des fibres végétales, des alkyl(poly)glycosides, des tannins, des lignines, des ligninesulfonates ou des latex ou des mélanges de deux ou plus de ceux-ci ou des charbons biogènes.

2. Utilisation d'un agent adhésif à base de résine synthétique selon la revendication 1, **caractérisée en ce que** l'agent contient, comme charge biogène, de la farine de noyaux d'olives, de la farine de coquilles de noix de coco, de la farine de coquilles de noix, de la farine de coquilles de noisette, de la farine d'amande, de la farine de noyaux de pêche, de la farine de noyaux d'abricot ou de la farine de noyaux de cerise ou des mélanges de deux ou plus de celles-ci.

3. Utilisation d'un agent adhésif à base de résine synthétique selon la revendication 2, **caractérisée en ce que** l'agent contient, comme charge biogène, de la farine de noyaux d'olives ou de la farine de coquilles de noix de coco ou des mélanges de celles-ci.

4. Utilisation d'un agent adhésif à base de résine synthétique selon l'une quelconque des revendications 1 à 3, **caractérisée en ce que** la charge biogène est prévue au total en une proportion de 5 à 80% en poids par rapport à l'agent adhésif à base de résine synthétique et **en ce qu'**il s'agit d'un kit à deux composants, présentant un composant de résine synthétique (A) réactive et un composant durcisseur (B), le kit contenant de préférence la charge biogène dans le composant de résine synthétique (A) .

5. Utilisation d'un agent adhésif à base de résine synthétique selon l'une quelconque des revendications 1 à 4, **caractérisée en ce que** l'agent comporte comme composant de résine synthétique (A) réactive les époxy(méth)acrylates et/ou les (méth)acrylates de diol propoxylés ou éthoxylés aromatiques des formules selon la revendication 1 et comme composant durcisseur (B) un composant durcisseur présentant un peroxyde comme initiateur.

6. Agent adhésif à base de résine synthétique tel que défini dans l'une quelconque des revendications 1 à 4, **caractérisé en ce que** la ou les résines réactives durcissables à base d'époxyde dans le composant de résine synthétique (A) réactive comportent, comme époxyde, des polyglycidyléthers de Novolaque, de bisphénol F ou de bisphénol A ou des mélanges de ces époxydes, de préférence avec ou également sans diluant réactif et, dans le composant durcisseur B), comme durcisseur, ceux présentant deux groupes ou plus choisis parmi amino, imino et mercapto, par exemple des amines ou des thiols correspondants, ou également des thioalcools, des aminoalcools ou des aminothiols ou des mélanges de ces composés.

7. Utilisation d'un agent adhésif à base de résine synthétique selon l'une quelconque des revendications 1 à 6, **caractérisée en ce que** l'agent comporte un ou plusieurs autres additifs, en particulier choisis parmi les accélérateurs à base d'amine, les inhibiteurs (uniquement dans le cas de résines réactives durcissables par voie radicalaire), les diluants réactifs, les agents thixotropiques, les autres charges et également les autres additifs, choisis parmi les plastifiants, les diluants non réactifs, les diluants réactifs, les flexibilisateurs, les stabilisants, les adjuvants rhéologiques, les agents mouillants et dispersants et les additifs colorants.

8. Utilisation d'un agent adhésif à base de résine synthétique selon l'une quelconque des revendications 1 à 7, **caractérisée en ce qu'**il s'agit d'un système à deux composants sous forme d'une cartouche à deux chambres sans ou avec mélangeur statique.

9. Utilisation d'un agent adhésif à base de résine synthétique selon l'une quelconque des revendications 1 à 8 pour sceller au mortier des moyens d'ancrage dans des trous de forage humides, dans laquelle l'agent adhésif à base de résine synthétique et un moyen d'ancrage sont introduits dans un trou, dans une fente, également dans du béton fissuré, et l'agent adhésif à base de résine synthétique est amené à durcir.

10. Procédé pour sceller au mortier des éléments d'ancrage et des trous ou des fentes, dans lequel un agent adhésif à base de résine synthétique tel que défini dans l'une quelconque des revendications 1 à 8 est utilisé pour sceller au mortier des moyens d'ancrage et l'agent adhésif à base de résine synthétique et un agent d'ancrage étant introduits dans un trou ou dans une fente et l'agent adhésif à base de résine synthétique étant amené à durcir.
